# EUROPEAN PATENT SPECIFICATION

(11) **EP 3 041 314 B1**
(45) Date of publication and mention of the grant of the patent: **20.03.2019**
(21) Application number: 14838944.8
(22) Date of filing: 28.08.2014
(51) Int. Cl.: H05B 6/12

(54) **INDUCTION HEATING COOKER**
INDUKTIONSHERD
APPAREIL DE CUISSON À INDUCTION

(30) Priority: 30.08.2013 JP 2013179029
(43) Date of publication of application: 06.07.2016
(73) Proprietor: Panasonic Intellectual Property Management Co., Ltd., Osaka-shi, Osaka 540-6207 (JP)
(72) Inventor: OGAWA, Kenji, Osaka 540-6207 (JP); TAKAHASHI, Tomoya, Osaka 540-6207 (JP); ISAGO, Hiroshi, Osaka 540-6207 (JP); SUZUKI, Hidekazu, Osaka 540-6207 (JP)
(74) Representative: Eisenführ Speiser
(86) International application number: PCT/JP2014/004432
(87) International publication number: WO 2015/029441

(56) References cited:
- EP-A1- 2 312 910
- EP-A1- 2 632 230
- WO-A1-2010/103766
- WO-A1-2011/048816
- WO-A1-2012/098860
- WO-A1-2012/098860
- DE-A1-102010 030 392
- JP-A- S5 324 644
- JP-A- 2010 262 884
- JP-B2- S5 624 355

## Description

### TECHNICAL FIELD

The present invention relates to an induction-heating cooker that induction-heats a cooking container, using a heating coil.

### BACKGROUND ART

As to an induction-heating cooker that induction-heats a cooking container, using a heating coil, there is, for example, one described in Patent Document 1.

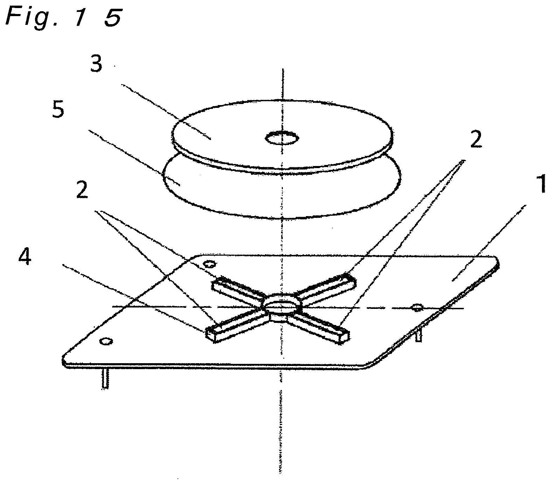

Fig. 15 depicts schematically the heating coil and its peripheral constituent elements of the induction-heating cooker described in Patent Document 1.

As shown in Fig. 15, the induction-heating cooker has plural ferrites 2, a resin-made ferrite holding member 4 with the plural ferrites 2 fitted therein, a support body 1 made of a nonmagnetic metal plate on which the ferrite holding member 4 is placed, an insulation plate 5 to be placed on the ferrite holding member 4, and a heating coil 3 to be placed on the insulation plate 5. These are integrated as a heating coil unit and are installed inside a main body of the induction-heating cooker.

Such a heating coil unit makes it possible to reduce the effect of the magnetic field (magnetic field generated by heating coil 3) on the inside of the main body of the induction-heating cooker, in particular, other parts arranged below the support body 1.
In the prior art a variety of ferrite holding members are known, e.g. from Patent Documents 2 to 5.

### PRIOR ART DOCUMENT

### PATENT DOCUMENT

Patent Document 1: Japanese Laid-Open Patent Publication No. 2007-157614
Patent Document 2: International patent application WO 2012/098860 A1
Patent Document 3: European patent application EP 2 312 910 A1
Patent Document 4: Japanese patent application 53-24644
Patent Document 5: European patent application EP 2 632 230 A1

### SUMMARY OF THE INVENTION

### PROBLEM TO BE SOLVED BY THE INVENTION

By the way, to enhance a heating efficiency of the heating coil 3, it is conceivable to arrange plural ferrites 2 with high density between the heating coil 3 and the support body 1. This makes it possible to gather much magnetic flux (suppress expansion of magnetic flux) by the ferrite 2, reducing the magnetic flux crossing the support body 1.

However, in the induction-heating cooker described in Patent Document 1, if the plural ferrites 2 are arranged with high density, the distance between two ferrites 2 is shortened. For this reason, the shape of the ferrite holding member 4 holding the plural ferrites 2 is complicated and as a result, it is possible that the volume of a resin material to be used for the ferrite holding member 4 is increased. It is possible that, as a result of designing the ferrite holding member 4 taking into account its attachment to the support body 1 and the insulation plate 5, a high-density arrangement of the plural ferrites 2 is limited (namely, flexibility of arrangement is decreased).

Further, the ferrite holding member 4 is nothing but a component only for the purpose of collectively holding the plural ferrites 2, mutually positioned. Namely, the ferrite holding member 4 is not essential for the function of the induction-heating cooker. Presence of such a ferrite holding member 4 results in an increase in the manufacturing cost of the induction-heating cooker.

In addition, when a member (component) other than the ferrite 2 is arranged between the heating coil 3 and the support body 1, its arrangement can possibly be limited by the ferrite holding member 4. For example, a temperature sensor (thermistor, infrared sensor, etc.) to detect the temperature of the cooking container on a top plate arranged above the heating coil 3 by way of an opening at the center of the heating coil 3 or by way of a space between windings of the heating coil 3 can be cited as the component to be arranged between the heating coil 3 and the support body 1.

Accordingly, the object of the present invention is to arrange ferrites with high density below a heating coil, without increasing the manufacturing cost and without lowering the flexibility of arrangement of the ferrites or other member below the heating coil, in an induction-heating cooker.

### MEANS FOR SOLVING PROBLEM

In order to achieve the above object, in one aspect of the invention, there is provided an induction-heating cooker according to claim 1.

### EFFECT OF THE INVENTION

According to the present invention, the ferrites can be arranged with high density below the heating coil, without increasing the manufacturing cost and without lowering the flexibility of arrangement of the ferrites or other member below the heating coil, in the induction-heating cooker.

### BRIEF DESCRIPTION OF DRAWINGS

The above aspects and features of the present invention will become more apparent from the following description of preferred embodiments thereof with reference to the accompanying drawings, and wherein:
Fig. 1 is a cross-sectional view of a schematic configuration of an induction-heating cooker according to a first embodiment of the present invention,
Fig. 2 is an exploded perspective view of a heating coil unit of the induction-heating cooker according to the first embodiment of the present invention,
Fig. 3 is a top view of an arrangement of ferrites positioned with respect to a support body in the induction-heating cooker according to the first embodiment of the present invention,
Fig. 4 is an exploded perspective view of the heating coil unit depicting an example of a protruding part for positioning the ferrites, formed on the support body of the induction-heating cooker according to the first embodiment of the present invention,
Fig. 5 is an exploded perspective view of the heating coil unit depicting another example of the protruding part for positioning the ferrites, formed on the support body of the induction-heating cooker according to the first embodiment of the present invention,
Fig. 6 is a perspective view of a different example of the protruding part for positioning the ferrites, formed on the support body of the induction-heating cooker according to the first embodiment of the present invention,
Fig. 7 is a perspective view of a further different example of the protruding part for positioning the ferrites, formed on the support body of the induction-heating cooker according to the first embodiment of the present invention,
Fig. 8 is an exploded perspective view of the induction-heating cooker according to a second embodiment of the present invention, with its top plate removed,
Fig. 9 is a perspective view of the heating coil unit of the induction-heating cooker according to the second embodiment of the present invention,
Fig. 10 is an exploded perspective view of the heating coil unit of the induction-heating cooker according to the second embodiment of the present invention,
Fig. 11 is a top view of an arrangement of ferrites positioned with respect to the support body in the induction-heating cooker according to the second embodiment of the present invention,
Fig. 12 is a perspective view of a configuration of a temperature sensor unit of the induction-heating cooker according to the second embodiment of the present invention,
Fig. 13 is a perspective view of the support body as viewed from below for description of an attachment of the temperature sensor unit to the support body,
Fig. 14 is a top view of the support body of the heating coil unit of the induction-heating cooker according to another embodiment of the present invention, and
Fig. 15 is an exploded perspective view of the heating coil unit of a conventional induction-heating cooker.

### EMBODIMENTS FOR CARRYING OUT THE INVENTION

An induction-heating cooker according to the invention has a heating coil, an insulation plate on which the heating coil is placed, a ferrite on which the insulation plate is placed and bonded, and a support body made of a nonmagnetic metal material having a main upper surface on which the ferrite is placed and bonded, wherein a plurality of protrusions protrude on the main upper surface of the support body in a predetermined pattern at lower than a thickness of the ferrite for positioning the ferrite on the main upper surface of the support body in a direction parallel to the main upper surface of the support body.

According to such a configuration, a ferrite holding member becomes unnecessary that collectively holds plural ferrites 20, mutually positioned, and that is attached to the support body. This makes it possible to arrange the ferrites with high density below the heating coil, without increasing the manufacturing cost and without lowering the flexibility of the arrangement of the ferrites or other member below the heating coil, in the induction-heating cooker.

The uneven part may be at least one protruding part arranged around such a part of the upper surface of the support body on which the ferrite is placed and having an upper end positioned at higher than the ferrite placement part.

When the protruding part is of a shape having a longitudinal direction and a short-length direction as viewed from above, the protruding part may be disposed on the support body so that the longitudinal direction of the protruding part is parallel with a flow direction of magnetic flux generated by the heating coil and flowing between the heating coil and the support body. This enables the magnetic flux to flow smoothly and as a result, lowering of a heating efficiency of the heating coil due to the protruding part is suppressed.

To make the longitudinal direction of the protruding part parallel with a flow direction of magnetic flux, the protruding part may be disposed on the support body so that the longitudinal direction of the protruding part is parallel with a radial direction with respect to the center of the heating coil.

The protruding part may be semi-cylindrical.

The protruding part may be a cut and raised part formed on the support body.

The protruding part may be formed by bending at least a part of the outer circumferential edge of the support body upward. This makes it possible to extend the ferrite to the vicinity of the outer circumferential edge of the support body. As a result, the ferrites can be placed on the support body with high density.

The protruding part may be hemispherical.

When the ferrite includes plural first ferrites having a relatively large size in the longitudinal direction and plural second ferrites having a relatively small size in the longitudinal direction, as viewed from above, the first and the second ferrites are placed on the support body so that their respective longitudinal directions are parallel with the radial direction with respect to the center of the heating coil and that one of the first or second ferrite is positioned between the second or first ferrites. As a result, the ferrites can be placed on the support body with high density.

Embodiments of the present invention will now be described with reference to drawings. The present invention is not to be limited by the embodiments.

### (First Embodiment)

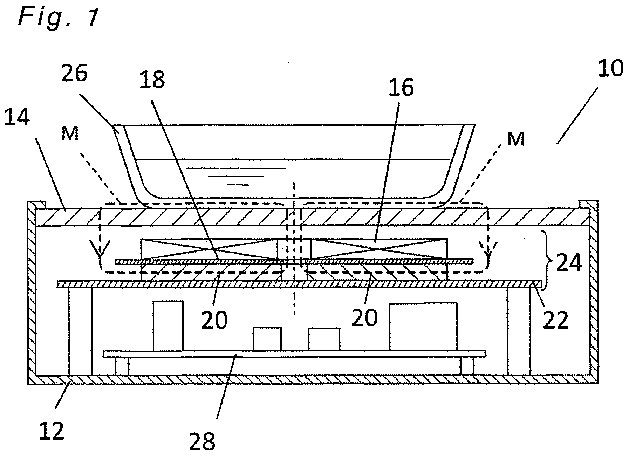

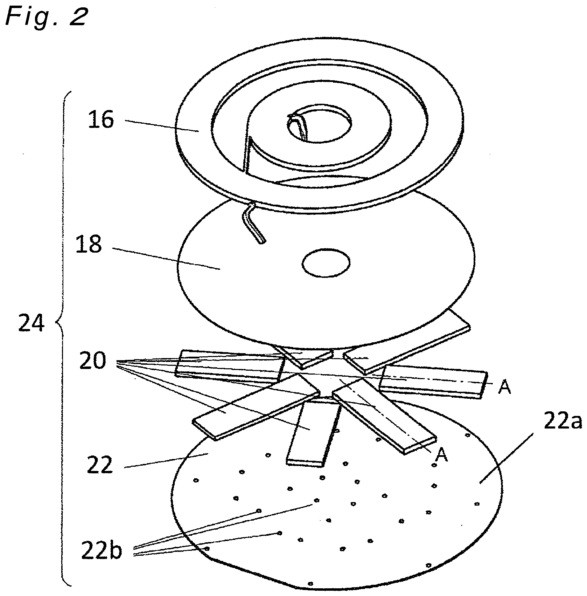

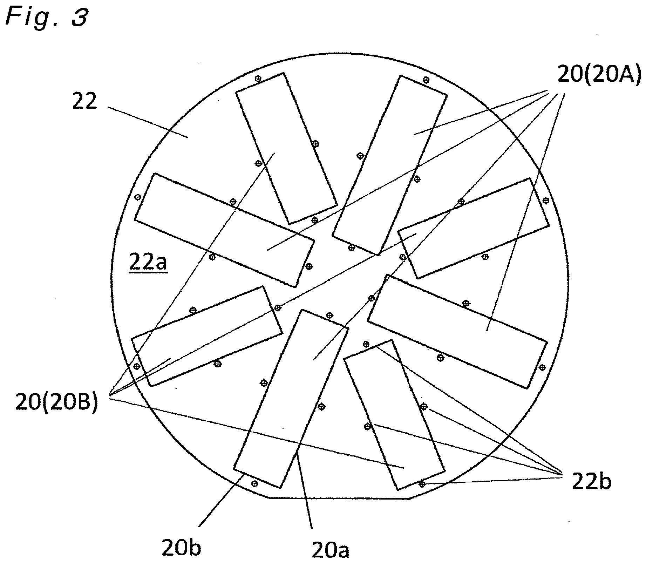

Fig. 1 is a cross-sectional view of a schematic configuration of the induction-heating cooker according to a first embodiment of the present invention. Fig. 2 is an exploded perspective view of a heating coil unit of the induction-heating cooker according to this first embodiment. Fig. 3 is a top view of an arrangement of ferrites with respect to the support body in the heating coil unit of the induction-heating cooker according to this first embodiment.

As shown in Figs. 1 and 2, an induction-heating cooker 10 according to this first embodiment has a box-like main body outer frame 12 with its upper part opened, a glass-made top plate 14 to be arranged in the upper part of the main body outer frame 12, a heating coil 16 to be arranged below the top plate 14, an insulation plate 18 having electrical insulation on which the heating coil 16 is placed, a ferrite 20 on which the insulation plate 18 is placed, and a support body 22 made of a nonmagnetic metal material on which the ferrite 20 is placed.

The heating coil 16, the insulation plate 18, the ferrite 20, and the support body 22 are integrated as a heating coil unit 24.

The heating coil 16 is composed, for example, by winding a Litz wire in a spiral form. The heating coil 16 generates magnetic flux M and induction-heats a cooking container 26 placed on the top plate 14 by the magnetic flux M. The heating coil 16 is placed on the insulation plate 18 and bonded to the insulation plate 18 by an adhesive.

The insulation plate 18 is, for example, laminated mica formed by laminating the mica in a plate state. The insulation plate 18 is placed on the ferrite 20 and is bonded to the ferrite 20 by the adhesive. The electrical insulation between the heating coil 16 and the ferrite 20 is secured by the insulation plate 18.

The ferrite 20 is a ferromagnetic and there are plural ferrites 20 in the case of this first embodiment. In the case of this first embodiment, each ferrite 20 is of a rectangular thin sheet having a long side 20a and a short side 20b as shown in Fig. 3 and has a longitudinal axis A (axis extending in longitudinal direction) as shown in Fig. 2. While details will be described later, in the case of this first embodiment, plural ferrites 20 include plural first ferrites 20A having a relatively large size in the direction of the longitudinal axis A and plural second ferrites 20B having a relatively small size in the direction of the longitudinal axis A, as shown in Fig. 3.

The ferrite 20 plays the role of gathering the magnetic flux M (suppressing expansion of magnetic flux) generated by the heating coil 16. Further, the plural ferrites 20 are placed on the support body 22 and are bonded to the support body 22 by the adhesive.

The support body 22 is a disk-like thin plate made of a nonmagnetic metal material, for example, aluminum. The support body 22 plays the role of blocking the magnetic flux M generated by the heating coil 16 leaking below the support body 22. By this, a component arranged below the support body 22, for example, a control board 28, is protected from the magnetic flux M generated by the heating coil 16. The control board 28 has, for example, a circuit to supply a high-frequency wave to the heating coil 16.

The support body 22 has an uneven part 22b for positioning the plural ferrites 20 to be placed on an upper surface 22a thereof. In the case of this first embodiment, the uneven part 22b is at least one protruding part arranged around such a part of the upper surface 22a of the support body 22 on which the ferrite 22 is placed and having an upper end positioned on the upper side (on the heating coil 16 side) than the ferrite 20 placement part. The protruding part 22b is, for example, substantially hemispherical or substantially dome-like, etc., and is of a shape having at least partially a curved surface. For example, the protruding part 22b is of a circular, elliptic, or similar shape, as viewed from above.

In the case of this first embodiment, the plural ferrites 20 (20A, 20B) are placed radially with respect to the center of the heating coil 16 as views from above, on the upper surface 22a of the support body 22. Specifically, the first and the second ferrites 20A and 20B are placed on the support body 22 so that their respective longitudinal axis A directions are parallel with the radial direction with respect to the center of the heating coil 16 and that one type ferrite is positioned between the other type ferrites. Since the plural ferrites 20 (20A, 20B) have different sizes in the longitudinal axis direction, the plural ferrites 20 (20A, 20B) can be placed on the upper surface 22a of the support body 22 with high density, as compared with the case of the same size.

To be able to realize such an arrangement of the plural ferrites 20, plural protruding parts 22b of the support body 22 are disposed on the upper surface 22a. Specifically, as shown in Fig. 3, the plural protruding parts 22b are disposed on the upper surface 22a of the support body 22, one each for, and opposed to, the long side 20a and the short side 20b of each of the plural ferrites 20. By such plural protruding parts 22b, the ferrite 20 placed on the upper surface 22a of the support body 22 is prevented from freely moving along the upper surface 22a.

In the induction-heating cooker 10, on the upper surface 22a of the support body 22, the ferrite 20 has its movement restricted by the protruding parts 22b. This makes it possible to position the ferrite 20 with respect to the support body 22. For example, until curing of the adhesive between the ferrite 20 and the support body 22, the ferrite 20 is positioned with respect to the support body 22.

Thus, since the ferrite 20 is positioned with respect to the support body 22 and is directly attached to the support body 22, the ferrite holding member becomes unnecessary that collectively holds plural ferrites 20, mutually positioned, and that is attached to the support body. For example, a 1.5 to 2 mm thick partition wall, etc., of the ferrite holding member intervening between adjacent ferrites 20 become unnecessary. As a result, it is made possible to place the ferrites 20 with higher density on the upper surface 22a of the support body 22, as compared with the case of using the ferrite holding member.

The shortest distance between the ferrites 20 adjacent to each other on the support body 22 may be in the order of 0.5 to 1 mm, taking into account variations in the size of the ferrite 20. In the case of using the ferrite holding member described above, since it is difficult to make a 0.5 to 1 mm thick partition wall of the ferrite holding member, the shortest distance between the ferrites 20 adjacent to each other cannot be made 0.5 to 1 mm. Namely, in the case of using the ferrite holding member, the shortest distance between the ferrites 20 adjacent to each other is made about 1.5 to 2 mm corresponding to the thickness of a manufacturable partition wall.

On the other hand, in the case of directly positioning the ferrite 20 with respect to the support body 22 by the protruding part 22b, the shortest distance between the ferrites 20 adjacent to each other can be made 0.5 to 1 mm. For this reason, the ferrites 20 can be placed with high density on the upper surface 22a of the support body 22, as compared with the case of using the ferrite holding member. For example, as shown in Fig. 3, in the case of arranging the plural ferrites 20 radially with respect to the center of the heating coil 16, the ferrites 20 can be arranged on the support body 22, with corner parts thereof on the center side of the heating coil 16 being in closer proximity to each other, as compared with the case of the ferrite holding member.

Because of no need for the ferrite holding member, the induction-heating cooker 10 according to this first embodiment can suppress its manufacturing cost, as compared with the case of using the ferrite holding member.

Further, the plural ferrites 20 can freely be arranged below the heating coil 16, without being restricted by the ferrite holding member.

Arrangement of the ferrites 20 with high density makes it possible to gather, by the ferrites 20 of a large volume, more of the magnetic flux M generated by the heating coil 16, thereby reducing the magnetic flux M crossing the support body 22. As a result, the heating efficiency of the heating coil 16 is enhanced.

In addition, the support body 22, which is made of the nonmagnetic metal material such as aluminum, can shield the magnetic field generated by the heating coil 16. As a result, a leakage of the magnetic field below the support body 22 can be suppressed.

In addition, rigidity (e.g., bending rigidity, deflection rigidity, etc.) of the heating coil unit 24 can be secured by the thin-plate support body 22 made of the metallic material. Namely, the heating coil 16, the insulation plate 18, and the ferrite 20 can be made thin. As a result, the heating coil unit 24 as well is made thin.

As described above, according to this first embodiment, the ferrites 20 can be arranged with high density below the heating coil 16, without increasing the manufacturing cost of the induction-heating cooker 10 and without lowering the flexibility of arrangement of the ferrites 20 below the heating coil 16.

The protruding part formed on the support body 22 for positioning the ferrites 20 is not limited to the substantially hemispherical (or substantially dome-like) protruding part 22b shown in Figs. 2 and 3.

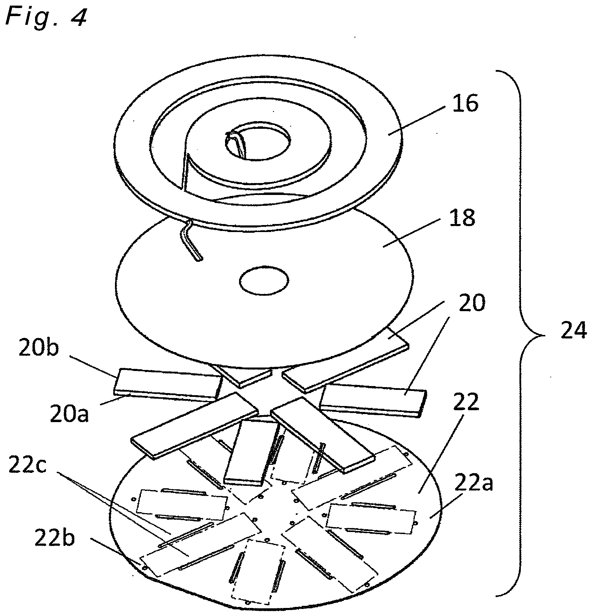

For example, as shown in Fig. 4, the support body 22 of the heating coil unit 24 has, on its upper surface 22a, the substantially hemispherical (or substantially dome-like) protruding part 22b and a substantially semi-cylindrical protruding part 22c as the protruding part for positioning the ferrites 20.

As seen from above, the substantially hemispherical (or substantially dome-like) protruding part 22b is opposed to the short side 20b of the ferrite 20 and the substantially semi-cylindrical protruding part 22c is opposed to the long side 20a of the ferrite 20 and extends in parallel with an extending direction of the long side 20a thereof. The substantially semi-cylindrical shape means a convex shape that has a partially curved surface and that is substantially rectangular as seen from above.

The number of the protruding parts to be disposed for one ferrite 20 is not limited.

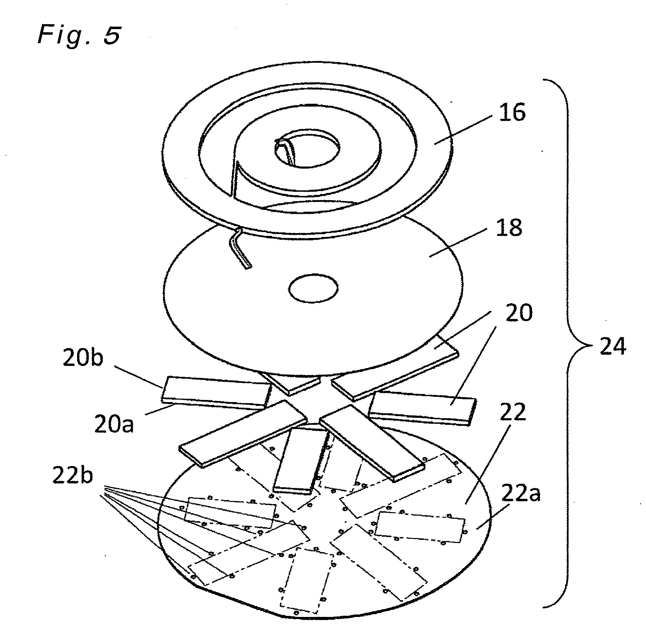

In the case of Fig. 3, the plural protruding parts 22b are disposed on the support body 22 in such a manner that one protruding part 22b is opposed to each of the long side 20a and the short side 20b of the ferrite 20, as seen from above. In place of this, as shown in Fig. 5, the plural protruding parts 22b may be disposed on the upper surface 22a of the support body 22 in such a manner that two protruding parts 22b are opposed to the long side 20a of the ferrite 20 and one protruding part 22b is opposed to the short side 20b, as seen from above. If the ferrite 20 can be positioned with respect to the support body 22, the number of the protruding parts for the positioning is not limited.

Further, the protruding part for positioning the ferrite 20 with respect to the support body 22 may be formed by cutting and raising.

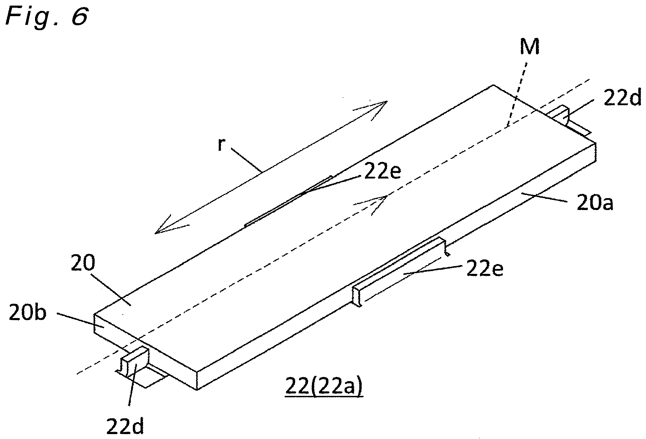

Fig. 6 depicts the protruding parts (cut and raised parts) 22d and 22e formed by partially cutting and raising the support body 22 toward the upper surface 22a side.

The cut and raised parts 22d and 22e shown in Fig. 6 are formed by making a throughhole of "square brackets" shape in the support body 22 and raising a part thereof surrounded by the throughhole toward the upper surface 22a side.

When the cut and raised parts 22d and 22e are shaped to have a longitudinal direction and a short-length direction as viewed from above, it is preferable to have these cut and raised parts disposed on the support body 22 so that the longitudinal directions are parallel with a flow direction of the magnetic flux M generated by the heating coil 16 between the heating coil 16 and the support body 22. The flow direction of the magnetic flux M between the heating coil 16 and the support body 22 is the radial direction with respect to the center of the heating coil 16 (in this first embodiment, substantially radial direction r, since the heating coil 16 is of a circular shape).

To be more specific, since the cut and raised parts 22d and 22e are a part of the support body 22 made of the nonmagnetic metal material, the flow of the magnetic flux M changes (is attenuated), affected by the cut and raised parts 22d and 22e. Since the heating efficiency changes as the flow of the magnetic flux M changes, the cut and raised part 22d and 22e need to be disposed on the support body 22 so that these parts minimally affect the flow of the magnetic flux M (so that the magnetic flux is not attenuated by the cut and raised parts).

For this reason, the cut and raised parts 22d and 22e are disposed on the support body 22 so that, as viewed from above, the longitudinal directions are parallel with the flow direction of the magnetic flux M generated by the heating coil 16 below the heating coil 16 (radial direction r of the heating coil 16, in the case of this first embodiment). By this, as compared with the case of the longitudinal direction of the cut and raised parts 22d and 22e crossing (e.g., orthogonal to) the flow direction of the magnetic flux M as viewed from above, blocking of the flow of the magnetic flux M by the cut and raised parts 22d and 22e is suppressed (by making an area of the cut and raised part crossing the magnetic flux M small, the attenuation of the magnetic flux M can be suppressed to a minimum).

For the same reason, not to block the flow of the magnetic flux M between the heating coil 16 and the support body 22, the substantially semi-cylindrical protruding part 22c shown in Fig. 4 is disposed on the support body 22 so that it extend in parallel with the radiation radial direction with respect to the center of the heating coil 16.

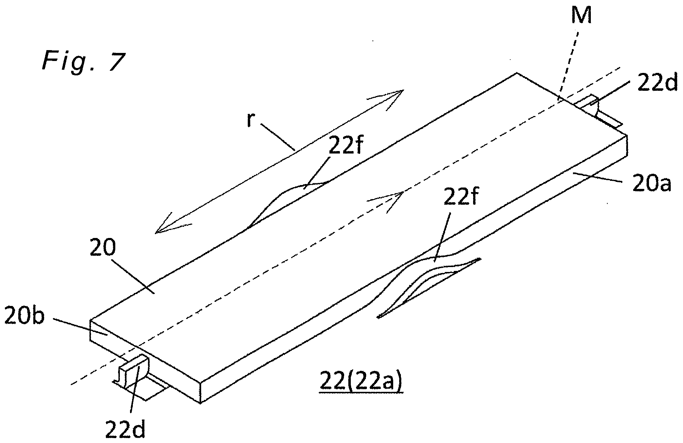

The cut and raised part disposed on the support body 22 is not limited to the wall-like cut and raised part formed by making the throughhole of a substantially "square brackets" shape in the support body 22 and raising the part thereof surrounded by the throughhole toward the upper surface 22a side, as shown in Fig. 6. For example, as shown in Fig. 7, the cut and raised part may be an arched cut and raised part 22f. Such an arched cut and raised part 22f is formed by making two parallel slit-like (or slot-like) throughholes in the support body 22 and deforming the part sandwiched by the two throughholes so that the part is protruded upward.

Like the cut and raised part 22d and 22e shown in Fig. 6, the arched cut and raised part 22f shown in Fig. 7 is formed on the support body 22 so that the longitudinal direction is parallel with the flow direction of the magnetic flux M, as seen from above.

In addition, when the distance between the top plate 14 and the heating coil 16 is short, it is preferable to place a same insulation plate as the insulation plate 18 on the heating coil 16. The glass-made top plate 14 (see Fig. 1) on which the cooking container 26 is placed has its dielectric constant increased as its temperature rises. In an extremely high temperature, the top plate 14 becomes a conductor. For this reason, when the distance between the top plate 14 and the heating coil 16 is short, it is preferable to electrically insulate between the top plate 14 and the heating coil 16, taking safety into consideration. To realize this electrical insulation, for example, the same insulation plate as the insulation plate 18 is placed on the heating coil 16.

In addition, to dissipate the heat of the heating coil 16 to the support body 22 made of the metallic material by way of the insulation plate 18 and the ferrite 20, grease or an adhesive excellent in heat conductivity may be applied to at least one of the spaces between the heating coil 16 and the insulation plate 18, between the insulation plate 18 and the ferrite 20, and between the ferrite 20 and the support body 22.

During operation of the induction-heating cooker 10, the heating coil 16 comes to a high temperature state due to a self-generated heat or due to a radiation heat from the top plate 14. To efficiently transfer the heat of the heating coil 16 to the metallic support body 22 excellent in heat dissipation, the adhesive excellent in heat conductivity is used for bonding between the constituent elements of the heating coil unit 24.

### (Second Embodiment)

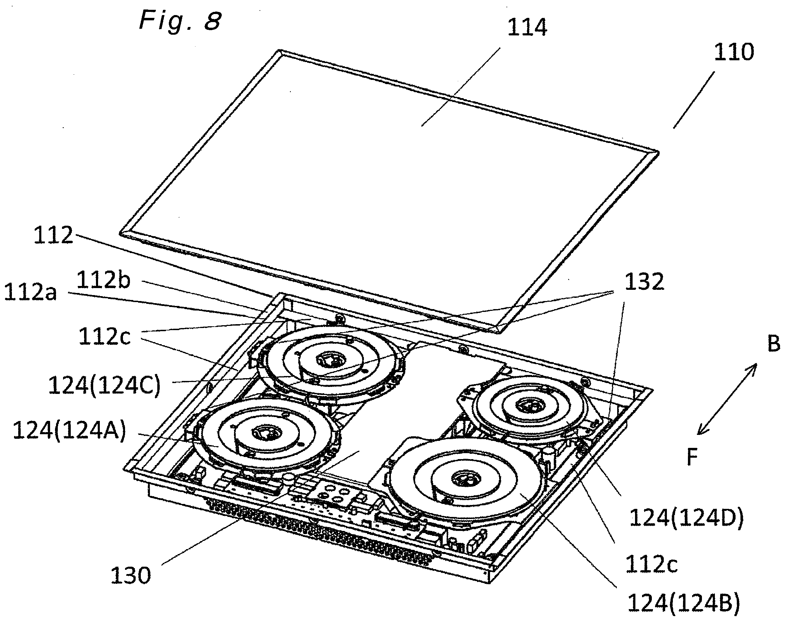

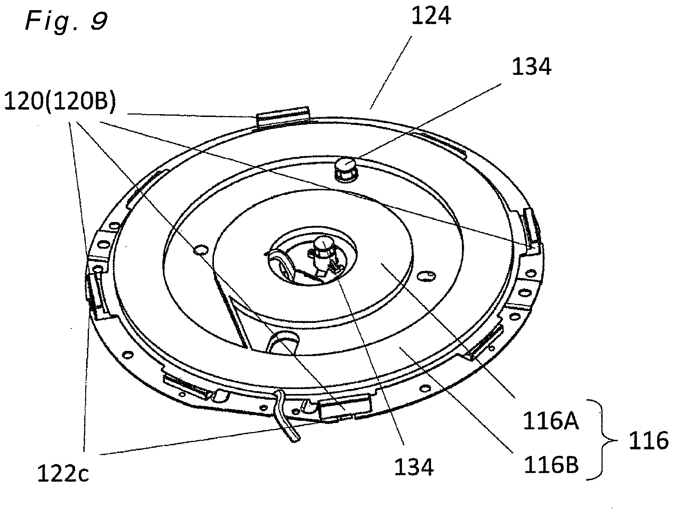

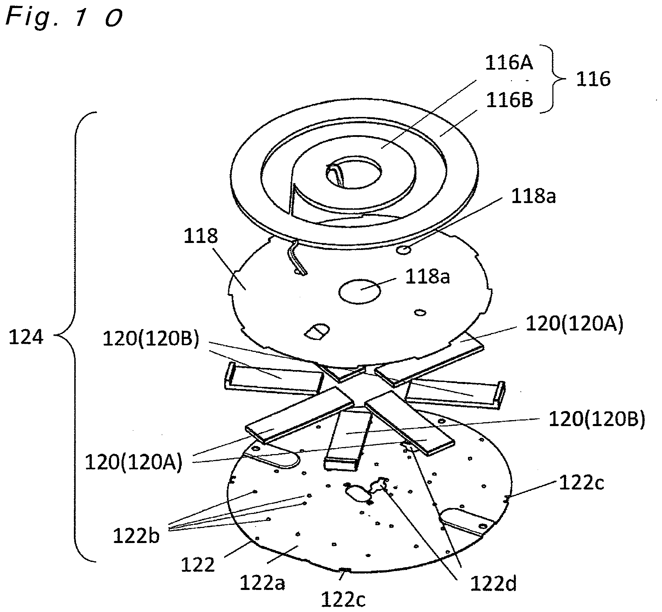

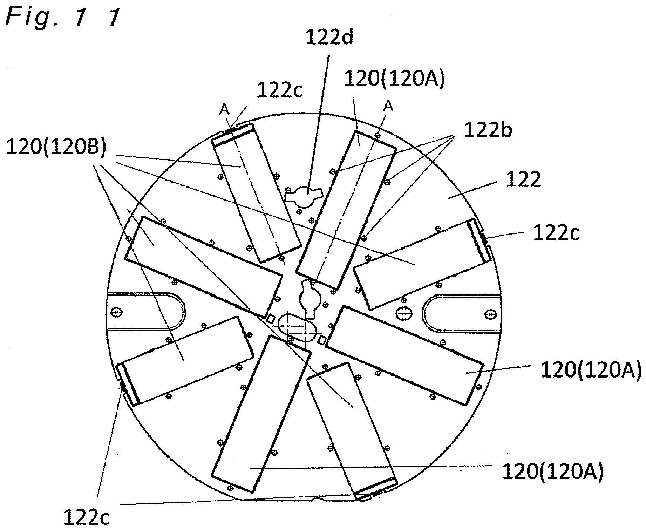

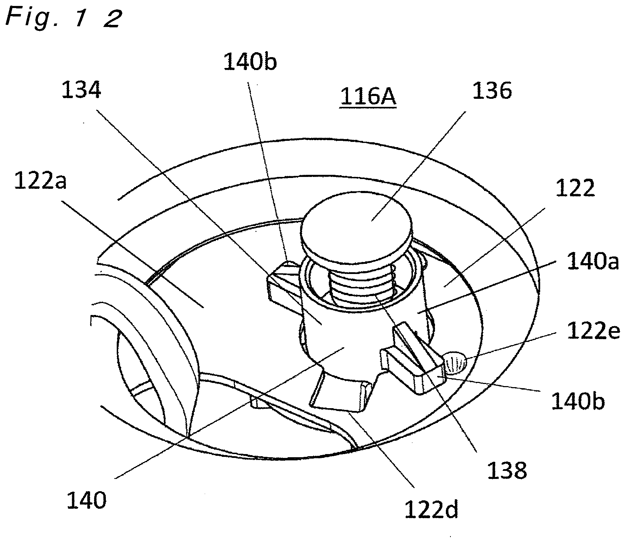

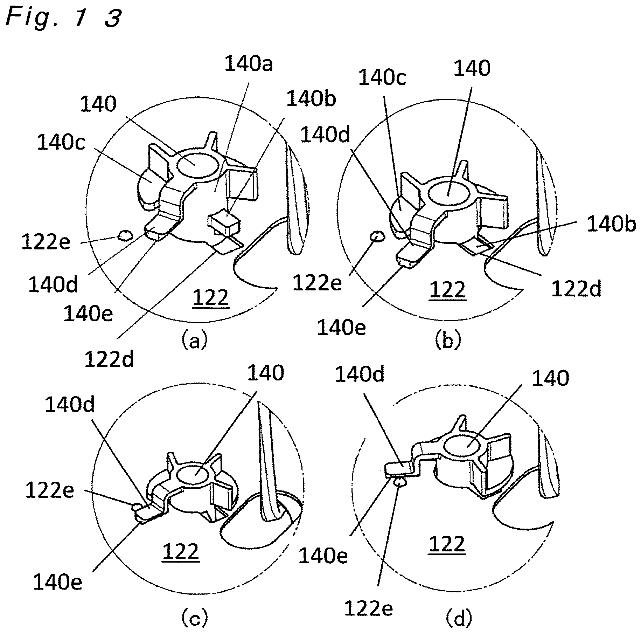

Fig. 8 is an exploded perspective view of the induction-heating cooker according to a second embodiment of the present invention, with its top plate removed. Fig. 9 is a perspective view of the heating coil unit of the induction-heating cooker according to this second embodiment. Fig. 10 is an exploded perspective view of the heating coil unit according to this second embodiment. Fig. 11 is a top view of an arrangement of the ferrites positioned with respect to the support body in this second embodiment. Fig. 12 is a perspective view of a configuration of a temperature sensor unit of the induction-heating cooker according to this second embodiment. Fig. 13 is a perspective view of the support body as viewed from below for description of an attachment of the temperature sensor unit shown in Fig. 12 to the support body.

As shown in Fig. 8, an induction-heating cooker 110 according to this second embodiment has four heating coil units 124 (124Ato 124D) installed inside a main body external frame 112. Two heating coil units 124Aand 124B are arranged on the front side (F side of arrow indicative of front-rear direction) of the induction heating cooker 110 and two heating coil units 124C and 124D are arranged on the rear side (B side) of the induction-heating cooker 110.

The heating coil unit 124A arranged in the front left and the heating coil unit 124C arranged in the rear left are a same unit. The heating coil unit 124B arranged in the front right has the heating coil of a maximum diameter (its coil diameter is large as compared with that of the heating coil of the heating coil unit 124A in the front left). The heating coil unit 124D arranged in the rear right has the heating coil of a minimum diameter (its coil diameter is small as compared with that of the heating coil of the heating coil unit 124A in the front left). Four heating coil units 124A to 124D have a substantially same configuration though the size is different.

The main body outer frame 112 has a shape of a box opened upward and has an opening 112a in its upper part. The main body outer frame 112 has in its upper part a flange part 112b formed by bending outward and horizontally. With a top plate 114 placed on this flange part 112b, the opening 112a is covered by the top plate 114. Inside the main body outer frame 112, electrical components are housed such as an inverter (not shown) to supply a high frequency current to the heating coil unit 124.

Further, the main body outer frame 112 has a horizontal step surface 112c formed by bending a part of a side wall inwardly. A reinforcing plate 130 to reinforce the main body outer frame 112 is disposed that extends in the front-rear direction of the induction-heating cooker 110 and that has its both ends fixed to the step surface 112c of the front-side side wall and the step surface 112c of the rear-side side wall by a screw, etc.

Plural heating coil units 124, placed on heating coil unit holding stands 132 made from a resin material, are housed inside the main body outer frame 112. To the left-side step surface 112c of the main body outer frame 112, the heating coil unit holding stands 132 for the heating coil units 124A and 124C are fixed by way of a screw. To these heating coil unit holding stands 132, support bodies 122 of the heating coil units 124A and 124B are fixed by the screw. As a result, the heating coil units 124A and 124B are fixed to the left-side step surface 112c by way of the heating coil unit holding stands 132. Likewise, the heating coil unit 124D is fixed to the right-side step surface 112c by way of the heating coil unit holding stand 132.

Since the heating coil unit 124B is large as compared with other heating coil units, its support body 122 is directly fixed to the right-side step surface 112c, without using the heating coil unit holding stand 132.

Each of the plural heating coil units 124 (124A to 124D) has a part of its support body 122 placed on the reinforcing plate 130 and fixed to the reinforcing plate 130 by the screw.

As shown in Figs. 9 to 11, the heating coil unit 124, like the heating coil unit 24 of the first embodiment, has a heating coil 116, an insulation plate 118, ferrite 120, and the support body 122. These constituent elements of the heating coil unit 124 are almost the same (in terms of function, substantially the same) as those of the heating coil unit 24 of the first embodiment. Therefore, features different from those of the first embodiment will be described.

As shown in Figs. 10 and 11, plural ferrites 120 include plural first ferrites 120A having a relatively large size in a longitudinal axis A direction and plural second ferrites 120B having a relatively small size in the longitudinal axis A direction. The first ferrite 120A, like the ferrite 20 of the first embodiment, is rectangular thin-plate. On the other hand, the second ferrite 120B is L-shaped as viewed from the side. Specifically, the second ferrite 120B has a rising part extending upward at the edge on the outer side in the radial direction of the heating coil 116.

The first and the second ferrites 120A and 120B are placed on the support body 122 so that their respective longitudinal axis A directions are parallel with the radial direction with respect to the center of the heating coil 116 and that one is positioned between the others.

Like the ferrite 20 of the first embodiment, plural ferrites 120 (120A and 120B) are positioned by the protruding parts 122b disposed on the support body 122 and are placed on the upper surface 122a of the support body 122.

Further, the outer side edge of the second ferrite 120B is positioned by a protruding part 122c formed by bending a part of the outer circumferential edge of the support body 122 upward (movement to the outer side in the radial direction of the heating coil 116 is regulated).

An annular protruding part may be formed by bending all of the outer circumferential edge of the support body 122 upward. Namely, the support body 122 may be made tray-like.

By such a protruding part 122c formed by bending at least a part of the outer circumferential edge upward, the size in the longitudinal axis A direction of the ferrite 120 (second ferrite 120B) can be made large. As a result, the ferrites 120 can be placed on the support body 122 with high density and the heating efficiency of the heating coil 116 is enhanced.

As shown in Fig. 9, to make the temperature distribution of the cooking container during heating uniform, the heating coil 116 of the heating coil unit 124 has an inside coil 116A arranged on the center side and an outside coil 116B arranged so as to surround the inside coil 116A, keeping a space in between. A temperature sensor units 134 having a thermistor to detect the temperature of the cooking container are disposed at the center of the inside coil 116A and between the inside coil 116A and the outside coil 116B.

As shown in Fig. 12, the temperature sensor unit 134 has a temperature sensor 136 to detect the temperature of the cooking container on the top plate 114, a spring 138 to bias the temperature sensor 136 so as to come into contact with the lower surface of the top plate 114, and a cylindrical temperature sensor holding stand 140 made from the resin material and housing the temperature sensor 136 and the spring 138. The temperature sensor 136, kept in contact with the lower surface of the top plate 114 by the bias of the spring 138, indirectly detects the temperature of the cooking container placed on the top plate 114 by detecting the temperature of the top plate 114.

The cylindrical temperature sensor holding stand 140 of the temperature sensor unit 134 is attached to the support body 122 so as to run through the support body 122. For this reason, in the support body 122, a throughhole 122d is formed through which the temperature sensor holding stand 140 can pass. A throughhole 118a through which the temperature sensor unit 134 passes is disposed in the insulation plate 118 so that the temperature sensor 136 of the temperature sensor unit 134 attached to the support body 122 can come into contact with the lower surface of the top plate 114.

The temperature sensor holding stand 140 of the temperature sensor unit 134 has an upper side fixing part 140b protruding from a cylindrical main body part 140a and abutting on the upper surface of the support body 122, and a lower side fixing part 140c protruding from the cylindrical main body part 140a and abutting on the lower surface of the support body 122. The temperature sensor holding stand 140 has a lever part 140d extending from the main body part 140a and having its movement restricted by a convex stopper part 122e protruding downward from the lower surface of the support body 122. In the state in which the temperature sensor unit 134 is attached to the support body 122, the lever part 140d is configured so that the upper surface 140e of the tip thereof is opposed to the lower surface of the support body 122, with a small space kept in between as compared with a protrusion amount of the stopper part 122e or with these surfaces in contact with each other.

The attachment of the temperature sensor unit 134 to the support body 122 will be described with reference to Fig. 13. Fig. 13 depicts the support body 122 as viewed from the lower surface side.

As shown in Fig. 13(a) and Fig. 13(b), the temperature sensor holding stand 140 of the temperature sensor unit 134 is inserted into the throughhole 122d of the support body 122 from the lower surface side of the support body 122 until the lower side fixing part 140c abuts on the lower surface of the support body 122. The throughhole 122d of the support body 122 has a shape permitting a passage of the main body part 140a and the upper side fixing part 140b of the temperature sensor holding stand 140 (see Fig. 11). Since a wiring (not shown) of the temperature sensor 136 extends from the lower side of the cylindrical main body part 140a of the temperature sensor holding stand 140, it is preferable to have the temperature sensor unit 134 inserted into the throughhole 122d from the lower side of the support body 122, in consideration of workability.

After the lower side fixing part 140c of the temperature sensor holding stand 140 has abutted on the lower surface of the support body 122 and the upper side fixing part 140b has passed through the throughhole as shown in Fig. 13(b), the temperature sensor unit 134 (temperature sensor holding stand 140) is rotated around the rotation center line extending in vertical direction as shown in Fig. 13(c). By this, the tip of the lever part 140d of the temperature sensor holding stand 140 comes into contact with the stopper part 122e of the support body 122. At the same time, the support body 122 is sandwiched between the upper side fixing part 140b and the lower side fixing part 140c of the temperature sensor holding stand 140. As a result, the temperature sensor unit 134 (temperature sensor holding stand 140) has its movement in vertical direction with respect to the support body 122 regulated.

By further rotating the temperature sensor holding stand 140, the lever part 140d of the temperature sensor holding stand 140 is caused to override the stopper part 122e of the support body 122, as shown in Fig. 13(d). As a result, the lever part 140e has its movement regulated (locked) by the stopper part 122e and the temperature sensor holding stand 140 rotating and falling out of the throughhole 122d of the support body 122 is suppressed.

The rotation of the temperature sensor holding stand 140 may be regulated by disposing two stopper parts 122e and arranging the tip of the lever part 140d between them.

Such an attachment of the temperature sensor holding stand 140 to the support body 122 makes it possible to easily attach the temperature sensor unit 134 to the support body 122, without using screws, etc. As described above, after the attachment of the temperature sensor holding stand 140 to the support body 122, the temperature sensor holding stand 140 may be fixed to the support body 122 by the adhesive, screws, etc. In particular, in the case of using an infrared sensor as the temperature sensor 136, since high attachment accuracy is required (variations in temperature detection accuracy are caused by variations of attachment), it is preferable to fix the temperature sensor unit 134 to the support body 122 by screws. In this case, the temperature sensor unit 134 (temperature sensor holding stand 140), with its movement in vertical direction with respect to the support body 122 regulated and with its rotation around the rotation center line extending in vertical direction regulated, is fixed to the support body 122 by way of screws. Since the temperature sensor holding stand 140 has its movement and rotation regulated, screwing work is easy.

In the case of the heating cooker of the conventional configuration (shown in Fig. 15), namely, in the case of the ferrite being held by the ferrite holding member made from the resin material, the temperature sensor holding stand was made as a part of the ferrite holding member. For this reason, much resin material was necessary. In the case of this second embodiment, however, since there is no ferrite holding member, a small amount of resin is used for the resin components to be attached to the heating coil unit. As a result, the manufacturing cost of the induction-heating cooker can be suppressed.

As shown in Fig. 13, since the stopper part 122e is disposed on the lower surface of the support body 122, the lever part 140d of the temperature sensor holding stand 140 is not required to pass through the throughhole 122d of the support body 122. For this reason, a small throughhole, through which the cylindrical main body part 140a and the upper side fixing part 140b of the temperature sensor holding stand 140 can pass, is enough for the throughhole 122d. The labor can be eliminated of passing the lever part 140d through the throughhole 122d.

Further, as shown in Fig. 13, since, on the lower surface side of the support body 122, the lever part 140d of the temperature sensor holding stand 140 is locked by the stopper part 122e protruding downward from the lower surface of the support body 122, namely, since the stopper part 122e is not disposed on the upper surface of the support body 122, the magnetic flux of the heating coil 116 flowing along the upper surface of the support body 122 can flow smoothly, without being disturbed by the stopper part 122e.

The stopper part 122a may be disposed on the upper surface of the support body 122 if the magnetic flux flowing between the heating coil 116 and the support body 122 is hardly affected.

Further, the stopper part 122e protruding downward from the lower surface of the support body 122 is useful for the commonalization of the support body 122.

For example, there can be a desire to use the support body 122 commonly for plural heating coil units of different specifications. For example, when the shape of the ferrite is different in the plural heating coil units of different specifications, if the stopper part 122e is disposed on the upper surface of the support body 122, the ferrite can interfere with the stopper part 122e, depending on the shape of the ferrite. Therefore, the stopper part 122e is disposed on the lower surface of the support body 122 so that the support body 122 can be used commonly for the plural heating coil units of different specifications.

When the position of attaching the temperature sensor unit 134 to the support body 122 is different among the plural heating coil units of different specifications, the throughhole 122d into which the temperature sensor unit 134 is inserted is formed at plural corresponding positions in the support body 122 to be used commonly.

In addition, the stopper part 122e is not limited to a convex protruding downward from the lower surface of the support body 122 as shown in Fig. 13. For example, the stopper part 122e may be formed as a throughhole and a convex part to be engaged with the throughhole-stopper part 122e may be formed on the upper surface 140e of the lever part 140d. In this case, the throughhole-stopper part 122e may be combined with the throughhole 122d.

As described above, according to this second embodiment, the ferrites 120 can be arranged with high density below the heating coil 116 without increasing the manufacturing cost of the induction-heating cooker 110 and without lowering the flexibility of the arrangement of the ferrites 120 below the heating coil 116 and the arrangement of the temperature sensor unit 134.

While the present invention has hereinabove been described based on the two embodiments, the present invention is not limited to these embodiments.

For example, in the above embodiments, the protruding part as the uneven part for positioning the ferrite with respect to the support body is hemispherical (or dome-like), semi-cylindrical, and the cut and raised part (wall-like or arched) but the present invention is not limited thereto. The protruding part may be of a shape capable of positioning the ferrite. The protruding part may be a part of the support body or may be a separate body disposed on the support body.

In the above embodiments, the uneven part for positioning the ferrite with respect to the support body is at least one protruding part arranged around such a part of the upper surface of the support body on which the ferrite is placed and having an upper end positioned at higher than the ferrite 20 placement part but the uneven part according to the present invention is not limited thereto.

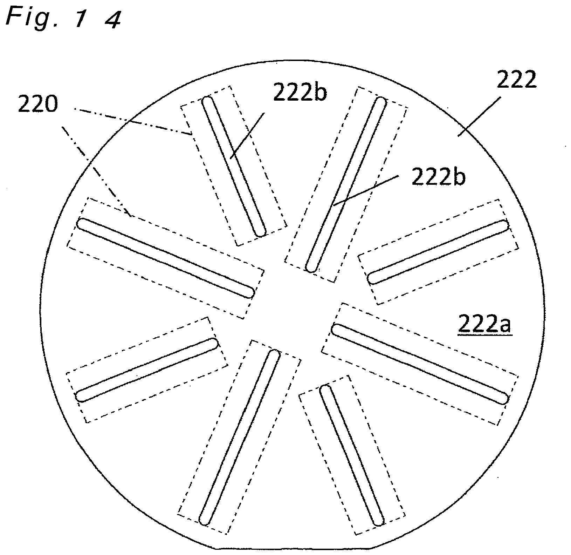

For example, a support body 222 of the heating coil unit of the induction-heating cooker shown in Fig. 14 has, as viewed from above, a linear concave part (positioning groove) 222b as the uneven part for positioning ferrite 220 with respect to the support body 222. The positioning groove 222b is located within the ferrite 220 placement part and extends in parallel with the longitudinal direction of the ferrite 220.

The ferrite 220, by being placed on the upper surface 222a of the support body 222 so as to hide the positioning groove 222b, is positioned with respect to the support body 222.

Such a positioning groove 222b, different from the protruding part of the above embodiments, cannot regulate the movement of the ferrite 220 on the support body 222. However, the positioning groove 222b, which does not protrude upward from the upper surface 222a, does not disturb the magnetic flux flowing between the heating coil and the support body 222. The positioning groove 222b may be used in combination with the protruding parts. When there are plural protruding parts, it can be difficult to understand positions of ferrites at the time of assembly. In this case, since the positions at which the ferrites are to be placed can be clearly indicated by the positioning grooves, assembly workability is enhanced.

Further, a concave part may be formed at such a part of the upper surface of the support body on which the ferrite is placed. Namely, by a height difference between the bottom of the concave part and the part of the upper surface of the support body other than the concave part, the ferrite is positioned. In other words, there is one protruding part arranged around such a part of the upper surface of the support body on which the ferrite is placed and having the upper end positioned at higher than the ferrite placement part.

Further, in the above embodiments, the protruding part as the uneven part to position the ferrite for the purpose of bonding it at a predetermined position on the upper surface of the support body. Namely, the protruding part does not fix the ferrite to the support body. In place of this, the protruding part may play the role of positioning the ferrite as well as fixing it to the support body.

For example, the ferrite 20, by being sandwiched by two opposing protruding parts (cut and raised parts) 22e shown in Fig. 6, may be positioned and held by these two protruding parts 22e (and additionally, the protruding parts 22d).

While this disclosure has sufficiently been described in connection with the preferred embodiments, referring to the attached drawings, various variations and modifications thereof are obvious to those skilled in the art. Such variations and modifications should be construed to be included in the present invention so long as they do not depart from the scope of the present invention defined by the appended claims.

### INDUSTRIAL APPLICABILITY

The present invention is applicable to the induction-heating cooker that induction-heats the cooking container by the heating coil.

## Claims

1. An induction-heating cooker (10, 110) comprising:
a heating coil (16, 116);
an insulation plate (18, 118) on which the heating coil (16, 116) is placed;
a ferrite (20, 120) on which the insulation plate (18, 118) is placed;
a support body (22, 122, 222) made of a nonmagnetic metal material having a main upper surface (22a, 122a, 222a, 140e) on which the ferrite (20, 120) is placed;
**characterized in that**
the insulation plate (18, 118) is bonded on the ferrite (20, 120);
the ferrite (20, 120) is bonded on the main upper surface (22a, 122a, 222a, 140e) of the support body (22, 122, 222);
a plurality of protrusions (22b - 22f, 122b, 122c, 222b) protrude on the main upper surface (22a, 122a, 222a, 140e) of the support body (22, 122, 222) in a predetermined pattern at lower than a thickness of the ferrite (20, 120) for positioning the ferrite (20, 120) on the main upper surface (22a, 122a, 222a, 140e) of the support body (22, 122, 222) in a direction parallel to the main upper surface (22a, 122a, 222a, 140e) of the support body (22, 122, 222).

2. The induction-heating cooker (10) according to claim 1, wherein
the at least one of the plurality of protrusions (22d, 22e, 22f) has a longitudinal direction and a short-length direction as viewed from above, and wherein
the at least one of the plurality of protrusions (22d, 22e, 22f) is disposed on the support body (22) so that the longitudinal direction of the protrusion (22d, 22e, 22f) is parallel with a flow direction of magnetic flux (M) generated by the heating coil (16) and flowing between the heating coil (16) and the support body.

3. The induction-heating cooker (10) according to claim 1, wherein
the at least one of the plurality of protrusions (22c) has a longitudinal direction and a short-length direction as viewed from above, and wherein
the at least one protrusion (22c) of the plurality of protrusions is disposed on the support body (22) so that the longitudinal direction of the protruding part (22c) is parallel with a radial direction with respect to the center of the heating coil (16).

4. The induction-heating cooker (10) according to any one of claims 1 to 3, wherein
the plurality of protrusions (22c) are semi-cylindrical.

5. The induction-heating cooker (10, 110) according to any one of claims 1 to 3, wherein
the protruding part (22d, 22e, 122c) is a cut and raised part formed on the support body (22; 122).

6. The induction-heating cooker (10, 110) according to claim 1, wherein
the at least parts of the plurality of protrusions (22d, 22e) are formed by bending at least a part of the outer circumferential edge of the support body (22) upward.

7. The induction-heating cooker (10) according to claim 1, wherein
the plurality of protrusions (22b) are hemispherical.

8. The induction-heating cooker (10, 110) according to any one of claims 1 to 7, wherein
the ferrite (20, 120) comprises a plurality of first ferrites (20A, 120A) and a plurality of second ferrites (20B, 120B) wherein the plurality of second ferrites (20B, 120B) have a shorter longitudinal direction than the plurality of first ferrites (20A, 120A), as viewed from above, and wherein
the first (20A, 120A) and the second (20B, 120B) ferrites are placed on the support body (22, 122, 222) so that their respective longitudinal directions are parallel with the radial direction with respect to the center of the heating coil (16, 116) and that one of the first or second ferrite is positioned between the second or first ferrites (20A, 120A).

## Patentansprüche

1. Induktionsheizkochgerät (10, 110), enthaltend:
eine Heizwicklung (16, 116);
eine Isolierscheibe (18, 118), auf welcher die Heizwicklung (16, 116) angeordnet ist;
einen Ferrit (20, 120), auf welchem die Isolierscheibe (18, 118) angeordnet ist;
einen Trägerkörper (22, 122, 222) aus einem nichtmagnetischen Metallmaterial mit einer oberen Hauptfläche (22a, 122a, 222a, 140e), auf welcher der Ferrit (20, 120) angeordnet ist;
**dadurch gekennzeichnet, dass**
die Isolierscheibe (18, 118) auf dem Ferrit (20, 120) verklebt ist;
der Ferrit (20, 120) auf der oberen Hauptscheibe (22a, 122a, 222a, 140e) des Trägerkörpers (22, 122, 222) verklebt ist;
eine Vielzahl von Vorsprüngen (22b - 22f, 122b, 122c, 222b) auf der oberen Hauptfläche (22a, 122a, 222a, 140e) des Trägerkörpers (22, 122, 222) in einem vorherbestimmten Muster niedriger als eine Dicke des Ferrits (20, 120) hervorstehen, um den Ferrit (20, 120) auf der oberen Hauptfläche (22a, 122a, 222a, 140e) des Trägerkörpers (22, 122, 222) in eine Richtung parallel zu der oberen Hauptfläche (22a, 122a, 222a, 140e) des Trägerkörpers (22, 122, 222) auszurichten.

2. Induktionsheizkochgerät (10) nach Anspruch 1, wobei
der mindestens eine von der Vielzahl von Vorsprüngen (22d, 22e, 22f) von oben gesehen eine Längsrichtung und eine Kurzlängenrichtung aufweist, und wobei
der mindestens eine von der Vielzahl von Vorsprüngen (22d, 22e, 22f) auf dem Trägerkörper (22) so angeordnet ist, dass die Längsrichtung des Vorsprungs (22d, 22e, 22f) parallel zu einer Flussrichtung des Magnetflusses (M) ist, der durch die Heizwicklung (16) erzeugt wird und zwischen der Heizwicklung (16) und dem Trägerkörper fließt.

3. Induktionsheizkochgerät (10) nach Anspruch 1, wobei
der mindestens eine von der Vielzahl von Vorsprüngen (22c) von oben gesehen eine Längsrichtung und eine Kurzlängenrichtung aufweist, und wobei
der mindestens eine Vorsprung (22c) von der Vielzahl von Vorsprüngen auf dem Trägerkörper (22) so angeordnet ist, dass die Längsrichtung des vorstehenden Teils (22c) zu einer in Bezug auf die Mitte der Heizwicklung (16) radialen Richtung parallel ist.

4. Induktionsheizkochgerät (10) nach einem der Ansprüche 1 bis 3, wobei
die Vielzahl von Vorsprüngen (22c) halbzylinderförmig sind.

5. Induktionsheizkochgerät (10, 110) nach einem der Ansprüche 1 bis 3, wobei
der vorstehende Teil (22d, 22e, 122c) ein geschnittener sowie erhöhter Teil ist, der auf dem Trägerkörper (22; 122) ausgebildet ist.

6. Induktionsheizkochgerät (10, 110) nach Anspruch 1, wobei
mindestens Teile von der Vielzahl der Vorsprünge (22d, 22e) durch das Aufwärtsbiegen mindestens eines Teils der äußeren Umfangskante des Trägerkörpers (22) ausgebildet sind.

7. Induktionsheizkochgerät (10) nach Anspruch 1, wobei
die Vielzahl der Vorsprünge (22b) halbkugelförmig ist.

8. Induktionsheizkochgerät (10, 110) nach einem der Ansprüche 1 bis 7, wobei
der Ferrit (20, 120) eine Vielzahl von ersten Ferriten (20A, 120A) und eine Vielzahl von zweiten Ferriten (20B, 120B) umfasst, wobei die Vielzahl von zweiten Ferriten (20B, 120B) von oben gesehen eine kürzere Längsrichtung als die Vielzahl von ersten Ferriten (20A, 120A) aufweist, und wobei
die ersten (20A, 120A) und die zweiten (20B, 120B) Ferrite auf dem Trägerkörper (22, 122, 222) so angeordnet sind, dass ihre jeweiligen Längsrichtungen zu einer in Bezug auf die Mitte der Heizwicklung (16) radialen Richtung parallel sind und dass einer der ersten oder zweiten Ferrite zwischen den zweiten oder ersten Ferriten (20A, 120A) angeordnet ist.

## Revendications

1. Appareil de cuisson à induction (10, 110) comprenant:
une bobine de chauffage (16, 116);
une plaque d'isolation (18, 118) sur laquelle est placée la bobine de chauffage (16, 116);
une ferrite (20, 120) sur laquelle est placée la plaque d'isolation (18, 118);
un corps de support (22, 122, 222) constitué d'un matériau métallique non magnétique ayant une surface supérieure principale (22a, 122a, 222a, 140e) sur laquelle est placée la ferrite (20, 120);
**caractérisé en ce que**
la plaque d'isolation (18, 118) est liée sur la ferrite (20, 120);
la ferrite (20, 120) est liée sur la surface supérieure principale (22a, 122a, 222a, 140e) du corps de support (22, 122, 222);
une pluralité de saillies (22b - 22f, 122b, 122c, 222b) font saillie sur la surface supérieure principale (22a, 122a, 222a, 140e) du corps de support (22, 122, 222) dans un motif prédéterminé à un niveau inférieur à une épaisseur de la ferrite (20, 120) pour positionner la ferrite (20, 120) sur la surface supérieure principale (22a, 122a, 222a, 140e) du corps de support (22, 122, 222) dans une direction parallèle à la surface supérieure principale (22a, 122a, 222a, 140e) du corps de support (22, 122, 222).

2. Appareil de cuisson à induction (10) selon la revendication 1, dans lequel
l'au moins une de la pluralité de saillies (22d, 22e, 22f) a une direction longitudinale et une direction de courte longueur telle que vue depuis le dessus, et dans lequel
l'au moins une de la pluralité de saillies (22d, 22e, 22f) est disposée sur le corps de support (22) de sorte que la direction longitudinale de la saillie (22d, 22e, 22f) est parallèle à une direction d'écoulement du flux magnétique (M) généré par la bobine de chauffage (16) et s'écoulant entre la bobine de chauffage (16) et le corps de support.

3. Appareil de cuisson à induction (10) selon la revendication 1, dans lequel
l'au moins une de la pluralité de saillies (22c) a une direction longitudinale et une direction de courte longueur telle que vue depuis le dessus, et dans lequel
l'au moins une saillie (22c) de la pluralité de saillies est disposée sur le corps de support (22) de sorte que la direction longitudinale de la partie saillante (22c) est parallèle à une direction radiale par rapport au centre de la bobine de chauffage (16).

4. Appareil de cuisson à induction (10) selon l'une quelconque des revendications 1 à 3, dans lequel
la pluralité de saillies (22c) sont semi-cylindriques.

5. Appareil de cuisson à induction (10, 110) selon l'une quelconque des revendications 1 à 3, dans lequel
la partie saillante (22d, 22e, 122c) est une partie découpée et surélevée formée sur le corps de support (22; 122).

6. Appareil de cuisson à induction (10, 110) selon la revendication 1, dans lequel
au moins parties de la pluralité de saillies (22d, 22e) sont formées par pliage d'au moins une partie du bord circonférentiel externe du corps de support (22) vers le haut.

7. Appareil de cuisson à induction (10) selon la revendication 1, dans lequel
la pluralité de saillies (22b) sont hémisphériques.

8. Appareil de cuisson à induction (10, 110) selon l'une quelconque des revendications 1 à 7, dans lequel
la ferrite (20, 120) comprend une pluralité de premières ferrites (20A, 120A) et une pluralité de secondes ferrites (20B, 120B), la pluralité de secondes ferrites (20B, 120B) ayant une direction longitudinale plus courte que la pluralité de premières ferrites (20A, 120A), telles que vues depuis le dessus, et dans lequel
les première (20A, 120A) et seconde (20B, 120B) ferrites sont placées sur le corps de support (22, 122, 222) de sorte que leurs directions longitudinales respectives sont parallèles à la direction radiale par rapport au centre de la bobine de chauffage (16, 116) et que l'une de la première ou de la seconde ferrite est positionnée entre les seconde ou première ferrites (20A, 120A).
